# EUROPEAN PATENT APPLICATION

(11) **EP 4 009 255 A1**
(43) Date of publication of application: **08.06.2022**
(21) Application number: 21210118.2
(22) Date of filing: 24.11.2021
(51) Int. Cl.: G06Q 10/06, B64D 11/02

(54) **SYSTEMS AND METHODS FOR VIRTUAL QUEUEING AND MOVEMENT EFFICIENCY WITHIN A CONFINED SPACE**

(30) Priority: 02.12.2020 US 202063120411 P; 21.10.2021 US 202117507613
(71) Applicant: The Boeing Company, Chicago, IL 60606-1596 (US)
(72) Inventor: Sandeen, Hannah, Chicago, 60606-1596 (US); Kholwadwala, Anokhi Sanjay, Chicago, 60606-1596 (US); Renteria, Marissa, Chicago, 60606-1596 (US); Le, Khanh Vy, Chicago, 60606-1596 (US); Attarwala, Ali, Chicago, 60606-1596 (US)
(74) Representative: Witte, Weller & Partner Patentanwälte mbB

(57) **Abstract**

Systems and methods may be used to create a virtual queue to regulate movement of individuals within a confined space, between each individual's assigned location within the confined space, and a commodity location of a shared commodity. A request is received from an individual to use the shared commodity, and the individual is assigned to a position in a virtual queue for the shared commodity, based on the individual's request, requests from other individuals, the additional inputs, a layout of the confined space, the assigned location of the individual, and/or the commodity location. The individual may be notified that he or she may use the shared commodity when the position of the individual in the virtual queue reaches a top of a sequential listing of entries of the virtual queue. Such systems and methods may be implemented or integrated into passenger transportation vehicles, such as aircraft, trains, and/or buses.

## Description

### FIELD

The present disclosure relates generally to systems and methods for virtual queueing and movement planning, and more particularly to systems and methods for regulating relative movement of persons within an enclosed and/or confined space.

### BACKGROUND

It is common for passengers to stand and wait outside lavatories in an aircraft or other passenger transportation vehicles, forming lines that may obstruct movement of passengers and crew members throughout the aircraft or vehicle. This practice is especially common during longer trips where most passengers need to use the lavatory at one time or another, as lavatories are accessed on a first-come first-served basis. Waiting may be problematic for children and elderly passengers, who may have a lesser ability to stand and wait for long periods to use the lavatory. In addition, passengers standing outside a lavatory cause inconvenience and crowding for passengers sitting near to the lavatory. Passengers who are standing in line in the aisles also may be vulnerable to falling or injury if the aircraft or other vehicle experiences turbulence or other unexpected movement. Even further, in the age of social distancing, forming lines outside lavatories may compromise the ability of passengers of maintain appropriate distances from one another, due to the limited available space in the aisles and proximity to other passenger seats.

### SUMMARY

To address these and other issues in the prior art, the present disclosure concerns systems and methods which may be used to create a virtual queue to regulate movement of individuals within the confined space. In presently disclosed methods, each individual may be given an assigned location within the confined space, and the method may include receiving a request from an individual of the plurality of individuals to use a shared commodity, assigning the individual to a position in a virtual queue for the shared commodity, and notifying the individual that the individual may use the shared commodity, when the position of the individual in the virtual queue reaches a top of a sequential listing of entries of the virtual queue. The shared commodity may be statically positioned in a commodity location within the confined space, such that the individual must move from the individual's assigned location to the commodity location to access the shared commodity. Methods may include receiving additional inputs from the individual pertaining to the request. In the disclosed methods, assigning the individual to their position in the virtual queue may be based on the individual's request, the additional inputs, a layout of the confined space, the assigned location of the individual, and/or the commodity location.

Related systems for regulating movement of a plurality of individuals within a confined space, wherein each individual is given an assigned location within the confined space, may include a shared commodity within the confined space, an input device configured to receive a request from one or more individuals of the plurality of individuals to use the share commodity, and a virtual queue for the shared commodity, wherein the virtual queue comprises a sequential listing of entries of individuals who have requested to use the shared commodity. It is generally assumed that the shared commodity is statically positioned in a commodity location within the confined space, and that the individual must move from the individual's assigned location to the commodity location to access the shared commodity. In some systems, the input device may be further configured to receive additional inputs from the one or more individuals pertaining to their submitted request. In creating the virtual queue, the individuals who have requested to use the shared commodity may be ordered based on profiles of the one or more individuals, additional inputs from the one or more individuals, a layout of the confined space, the assigned locations of the one or more individuals, and/or the commodity location. Said systems may be configured to notify a respective individual that the individual may use the shared commodity, when the position of the respective individual in the virtual queue reaches a top of the sequential listing of entries of the virtual queue. Such systems and methods may be implemented or integrated into passenger transportation vehicles, such as aircraft, trains, and/or buses.

### BRIEF DESCRIPTION OF THE DRAWINGS

Fig. 1 is a schematic representation of non-exclusive examples of systems according to the present disclosure.
Fig. 2 is an example of an input screen of a user interface for using presently disclosed systems.
Fig. 3 is another example of an input screen of a user interface for using presently disclosed systems.
Fig. 4 is another example of an input screen of a user interface for using presently disclosed systems.
Fig. 5 is a schematic, flowchart block diagram illustrative non-exclusive examples of methods according to the present disclosure.
Fig. 6 is a schematic representation of a sequential listing of entries of a virtual queue, at a first time.
Fig. 7 is a schematic representation of the sequential listing of entries of the virtual queue from Fig. 6, at a second time.

### DESCRIPTION

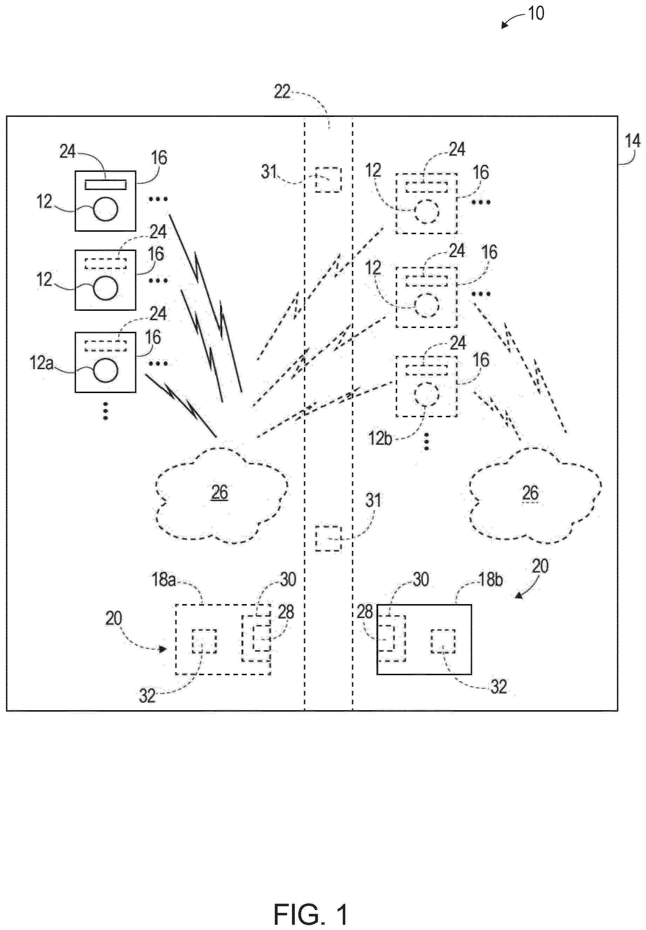

Fig. 1 schematically represents illustrative, non-exclusive examples of systems 10 according to the present disclosure. In general, elements that are likely to be included in a given (i.e., a particular) example are illustrated in solid lines, while elements that are optional to a given example are illustrated in dashed lines. However, elements that are shown in solid lines are not essential to all examples, and an element shown in solid lines may be omitted from a particular example without departing from the scope of the present disclosure.

Said systems 10 are configured for regulating movement of a plurality of individuals 12 within a confined space 14. For example, individuals 12 may be passengers within confined space 14, which may be a passenger vehicle, such as an aircraft, train, bus, or another type of confined space in which a plurality of individuals are located for any length of time. In other examples, confined space 14 may be a building, structure, or other enclosure in which a plurality of individuals 12 may be temporarily located (e.g., customers visiting a place of business to purchase an item or service). Each respective individual 12 may be assigned, given, or located in a respective assigned location 16 within confined space 14. For example, assigned location 16 may be a seat assignment within confined space 14 for each individual 12. In other examples, assigned location 16 may be a chosen seat, row, or other location within confined space 14 where the respective individual 12 is presently located at the time system 10 is engaged by individual 12.

System 10 includes at least one shared commodity 18 within confined space 14. Shared commodity 18 is generally a lavatory within confined space 14 in the examples discussed herein, though shared commodity 18 may be an area, a space, a device, an object, and/or any other scarce thing or place contained within confined space 14, such that confined space 14 contains more individuals 12 than shared commodities 18. In some examples, shared commodity 18 may be a person or service, such that systems 10 may be configured to regulate movement of individuals 12 within confined space 14 who are waiting to speak with a human or are waiting to have a service performed within confined space 14. In other words, each shared commodity 18 must be shared among a plurality of individuals 12, as confined space 14 does not include enough shared commodities 18 for each respective individual 12 to have or use their own respective commodity. In some systems 10, confined space 14 may include a plurality of shared commodities 18 positioned in one or more locations within confined space 14. Generally, each shared commodity 18 is statically positioned in a different respective commodity location 20 within confined space 14, though in some systems, shared commodities 18 may be mobile or portable to different locations within confined space 14.

Each respective shared commodity 18 may have its own respective commodity location 20, which may be spaced apart from or adjacent to other commodity locations 20 of other respective shared commodities 18 within confined space 14. In the case of an aircraft confined space 14, commodity locations 20 of various shared commodities 18 may be positioned near the rear of the aircraft cabin confined space 14, near the front of confined space 14, on opposing sides of an aisle 22 of confined space 14, and/or anywhere else within confined space 14 as desired for a particular application. Said shared commodities 18 are generally configured to be used by a single individual 12 at a time, meaning that individuals 12 may need to wait, if more than one individual 12 wishes to use shared commodity 18 at a particular time. Generally, commodity locations 20 are spaced apart from assigned locations 16 of individuals 12, such that a given individual 12 generally will need to move from their assigned location 16 to commodity location 20, to access shared commodity 18. For example, a respective individual 12 generally leaves their assigned location 16 (e.g., their assigned seat within confined space 14), and moves to commodity location 20 to use shared commodity 18 (e.g., individual 12 must move to the location of the lavatory to use the lavatory within confined space 14).

System 10 further includes at least one input device 24 configured to receive a request from one or more individuals 12 to use shared commodity 18. In some examples, system 10 includes a respective input device 24 for each respective individual 12 within confined space 14. For example, input device 24 may be integrated into each individual's assigned location 16, such as being coupled to the passenger seat for the respective individual 12, or integrated into a display or monitor at each assigned location 16 (e.g., an in-flight entertainment monitor or display). In this manner, existing aircraft or other confined spaces 14 may be retrofitted to include system 10, by integrating system 10 into pre-existing in-flight entertainment systems. In some examples, one or more individuals 12 may share one or more input devices 24. For example, system 10 may include one input device 24 per shared commodity 18, and/or system 10 may include one input device 24 per row of passengers, or a certain number of input devices 24 according to the total capacity of individuals 12 for confined space 14. In some examples, input device 24 may be an app installed on each individual's mobile phone, tablet, or other device. Additionally or alternatively, input device 24 may be a handheld device or personal device belonging to individual 12.

Each input device 24 generally provides a way for one or more individuals 12 to indicate their desire to have a turn to use shared commodity 18 (e.g., a way for one or more individuals 12 to request use of shared commodity 18). Input device 24 may also provide a way for one or more individuals 12 to enter additional inputs pertaining to the individual's request. For example, additional inputs may include preferences of individual 12 such as whether to use the closest available shared commodity 18, whether to use the first available shared commodity 18, and/or a request for a shared commodity 18 with a special accommodation such as a changing table or ADA accessibility. Additionally or alternatively, additional inputs may include an age, medical condition, and/or special request of individual 12.

System 10 includes a virtual queue 26 for shared commodity 18 that includes a sequential listing of entries of individuals 12 who have requested to use shared commodity 18 via input device 24. Virtual queue 26 orders individuals 12 who have requested to use shared commodity 18 based on user profiles, additional inputs provided by one or more individuals 12, the layout of confined space 14, assigned locations 16 of the one or more individuals 12 requesting use of shared commodity 18, and/or commodity location or locations 20. System 10 is configured to notify a respective individual 12 that the individual 12 may use shared commodity 18 when the position of the respective individual 12 in the virtual queue reaches a top of the sequential listing of entries of the virtual queue 26. Such notifications generally may be provided via input device 24, though other examples of system 10 may notify individuals 12 that it is their turn to use shared commodity 18 via other devices or in other manners without departing from the scope of the present disclosure. Such virtual queues 26 of disclosed systems 10 may thus improve passenger comfort and experience for individuals 12 in confined space 14, as individuals 12 will be able to efficiently use shared commodity 18 without standing in line and blocking aisles 22, which in turn can make shared commodity 18 more accessible to any individuals 12 having mobility constraints.

System 10 may be configured to change the position of one or more individuals 12 in virtual queue 26. For example, a subsequent request to use shared commodity 18 may be given a higher priority than a previously received request to use shared commodity 18, and thus the lower priority request may be moved lower down in the sequential listing, while the higher priority request is moved up in the sequential listing, thereby changing positions of one or more individuals 12 in virtual queue 26. Additionally or alternatively, as individuals 12 take their turns using shared commodity 18, they are removed from virtual queue 26, thereby allowing for others further down in the sequential listing to be moved up towards the top, thereby getting closer to that individual's turn to use shared commodity 18.

In some examples, system 10 is configured to notify each individual 12 of a current status of shared commodity 18 and/or their position in virtual queue 26, once a request to use shared commodity 18 is received. For example, system 10 may notify individual 12 of an approximate wait time, the number of people ahead of individual 12 in virtual queue 26, whether shared commodity 18 is available for use, when shared commodity 18 was last cleaned or will next be cleaned, accommodations available in shared commodity 18, and/or any other relevant status information for shared commodity 18. In a specific example, system 10 may be configured to notify each individual 12 who requests to use shared commodity 18 of a number of entries ahead of their position in the sequential listing of entries of virtual queue 26. Further, system 10 is configured to notify a respective individual 12 when it is their turn to use shared commodity 18. Such notifications may be provided to individual 12, for example, via input device 24.

Some systems 10 are configured to restrict access to shared commodity 18 for all individuals 12 except for the one respective individual 12 whose position is at the top of the sequential listing of virtual queue 26 (i.e., whose turn it is to use shared commodity 18). For example, shared commodity 18 may be locked or closed, such that only the respective individual 12 whose position is at the top of the sequential listing of entries of virtual queue 26 may access shared commodity 18. In some systems 10, access to shared commodity 18 is granted by use of access instructions, such as an access code, by the respective individual 12 whose turn it is to use shared commodity 18. For example, when system 10 notifies a respective individual 12 that it is their turn to use shared commodity 18, system 10 also may provide an access code or other access instructions to that individual 12, which the individual then uses to access shared commodity 18. The access instructions may be provided to the respective individual 12 at the top of virtual queue 26 via input device 24. Said access codes or other instructions may be changed periodically and/or after each use of shared commodity 18 such that only the respective individual 12 whose turn it is to use shared commodity 18 may be able to access shared commodity 18 during a given period of time. In some examples, each respective individual 12 who uses shared commodity 18 may be given a different respective access code to gain entry to and/or use of shared commodity 18.

Systems 10 may be configured to grant access to shared commodity 18 to a respective individual 12 at the top of virtual queue 26 via a mobile app, voice recognition, a personal device, a handheld device, and/or other input device 24. For example, input device 24 may provide individual 12 with access instructions, such as an access code, to access shared commodity 18 when it is the individual's turn to use shared commodity 18. Additionally or alternatively, an access code or other access instructions may be provided to the individual 12 via a mobile app, a personal device, an in-flight entertainment monitor, or another handheld device. Once a respective individual 12 has an access code or other instructions how to access shared commodity 18, said access code may be entered on, for example, a keypad or other entry device operatively coupled to shared commodity 18. Additionally or alternatively, access to shared commodity 18 may be granted by a QR code or bar code generated by system 10 when it is an individual's turn, with shared commodity 18 having a QR code scanner or bar code scanner to receive the QR code or bar code from the individual's input device 24 or other device storing such code. For example, to ensure individuals 12 do not attempt to bypass using virtual queue 26, systems 10 may include a monitor, or screen, on or near shared commodity 18 (e.g., on a door 30 of shared commodity 18) where individuals 12 may, for example, input their assigned location 16 (e.g., their seat number) to gain access to shared commodity 18, and/or use their personal device to scan a QR code that is presented on the screen. Additionally or alternatively, system 10 may be configured such that individual 12 may use their voice to access shared commodity 18 via a voice recognition system.

To this end, system 10 may include access hardware 28 that is configured to allow physical access to shared commodity 18. For example, access hardware 28 may include a keypad, a camera, an electronic display unit, a barcode scanner, a QR code scanner, a mechanical switch, a handheld device, a voice recognition device, and/or a sensor. Said access hardware 28 may be positioned at commodity location 20, such as at or near an entry way to shared commodity 18. In examples where shared commodity has a door 30 separating shared commodity 18 from the rest of confined space 14, access hardware 28 may be mounted on door 30, or mounted elsewhere near to door 30, such that access hardware 28 may be interacted with by individuals 12 as they are entering commodity location 20 to use shared commodity 18. In other examples where shared commodity 18 does not include door 30 separating it from the rest of confined space 14, said access hardware 28 may be positioned on or near shared commodity 18 in a similar manner. In either case, access hardware 28 may be operatively coupled to shared commodity 18 such that shared commodity 18 may only be accessed or used by interacting with access hardware 28 when it is a respective individual's turn to use shared commodity 18. Access hardware 28 may inform system 10 when shared commodity 18 is in use. For example, a signal may be generated when shared commodity 18 is accessed that shows that shared commodity 18 is not available currently. Additionally or alternatively, system 10 may include a sensor or camera at each respective assigned location 16 that is configured to monitor whether each respective individual 12 is at their assigned location 16 or not.

Some examples of systems 10 may be configured to assign a position in the sequential listing of entries of virtual queue 26 based on one or more priority rules. For example, a default priority rule may be based on the time of the request, such that earlier requests to use shared commodity 18 are positioned above later requests in virtual queue 26. This scenario would generally mimic a conventional first-come first-served system. However, presently disclosed systems 10 may incorporate priority rules that may position different respective individuals 12 differently, thereby altering the first-come first-served default priority. For example, the one or more priority rules may be configured to assign different positions to different respective individuals 12 submitting requests, based on information obtained from the additional inputs from individual 12, the respective assigned location 16 of individual 12, an age of individual 12, a medical condition of individual 12, and/or a special accommodation requested by individual 12. For example, a higher priority may be given to elderly or disabled individuals 12 than to other adult individuals 12. Additionally or alternatively, a higher priority may be given to children than to adult individuals 12. In some systems 10, individuals 12 seated in certain sections of assigned locations 16 may be given a higher priority, such as those seated in first class or business class sections of confined space 14.

In some examples, system 10 is configured to automatically close and/or lock door 30 after a respective individual 12 accesses shared commodity 18. Additionally or alternatively, system 10 may be configured to automatically close or lock door 30 after individual 12 has finished using shared commodity 18 and leaves commodity location 20. System 10 may be configured to automatically detect when a respective individual 12 has entered, used, and/or left shared commodity 18 or commodity location 20. Additional or alternatively, individual 12 may inform system 10 when they are finished using shared commodity 18, such as by performing a log out procedure, entering an exit code when exiting shared commodity 18, reversing the actions taken when accessing shared commodity 18, or other suitable actions. In some examples, commodity sensors 32, such as a weight sensor, motion sensor, IR sensor, heat sensor, or other type of sensor, may be included in system 10 to detect when individual 12 accesses shared commodity 18 and/or to detect whether individual 12 is within commodity location 20. For example, a weight sensor pad located in commodity location 20 may detect whether a given individual is at commodity location 20 or has left shared commodity 18. Such commodity sensors 32 may thereby serve as a backup to ensure that a given individual 12 has left shared commodity 18 before system 10 locks a door to shared commodity 18 and/or notifies the next individual in virtual queue 26 that they may use shared commodity 18. System 10 may be configured to automatically lock door 30 when individual 12 enters through door 30 to use shared commodity 18, and/or door 30 may include an interior locking mechanism which individual 12 may use to manually lock door 30 once individual 12 is inside the area of shared commodity 18 (and individual 12 may manually unlock door 30 once individual 12 is finished using shared commodity 18 and wishes to leave commodity location 20 and return to their assigned location 16).

System 10 may be configured to generate and/or receive a status signal when door 30 is opened or closed, and/or when any interior locking mechanism is engaged or disengaged. For example, shared commodity 18 may be configured to generate a status signal that is sent to virtual queue 26, which may then inform individuals 12 in the sequential listing of entries of new status information based on status signals received from shared commodity 18. For example, if a given individual 12 is fourth in line in the sequential listing of entries of virtual queue 26, once a different person finishes using shared commodity 18, a status signal indicating the same may be sent to virtual queue 26, at which point individual 12 may be notified that they are now third in line in the sequential listing of entries in virtual queue 26, and/or they may be notified of an updated (e.g., lesser) estimated wait time until their turn. Status signals may be generated by system 10 based on use of shared commodity 18 and may include information on a locking status of door 30 of shared commodity 18 (e.g., whether door 30 is locked or unlocked), information on an open status of door 30 of shared commodity 18 (e.g., indicating door 30 is open), information on a closed status of door 30 of shared commodity 18 (e.g., indicating door 30 is closed), information on a readiness of shared commodity 18, status information regarding cleaning of shared commodity 18 (e.g., whether shared commodity 18 is currently being cleaned, needs cleaning, and/or the time of the most recent cleaning), status information regarding a current configuration of shared commodity 18 (e.g., whether shared commodity is wheelchair accessible, or whether it has a changing table or other accommodations), and/or status information regarding preparation of shared commodity 18 to accommodate passenger needs.

In some systems 10, multiple shared commodities 18 may be included within confined space 14. Said shared commodities 18 may be substantially identical to one another, or one or more shared commodities 18 may be different from one or more other shared commodities 18 within confined space 14. In examples with a plurality of shared commodities 18, system 10 may be configured to receive information from individuals 12 on their preference as to which shared commodity 18 they prefer to wait for. For example, if one shared commodity 18 is wheelchair accessible, individual 12 may indicate their request to be placed in virtual queue 26 specifically for the respective shared commodity 18 that is wheelchair accessible. Said preferences on which shared commodity 18 is desired from among a plurality of shared commodities 18 may be entered as additional inputs, via input device 24. These preferences may be entered at the time individual 12 creates the request, and optionally may be updated at any time while individual 12 remains in virtual queue 26 (e.g., up until individual 12 is notified that it is their turn to use shared commodity 18). In systems 10 including multiple shared commodities 18, if a respective individual 12 does not enter a preference as to which shared commodity 18 they prefer to use, virtual queue 26 may be configured to assign the respective individual 12 to the respective shared commodity 18 with the lowest estimated wait time, the respective shared commodity 18 that has a respective commodity location 20 closest to the respective assigned location 16 of the respective individual 12, or to the respective shared commodity 18 that becomes available first.

In some systems 10 including a plurality of shared commodities 18, some or all of the plurality of shared commodities 18 may be serviced by a single virtual queue 26. Additionally or alternatively, in systems 10 including a plurality of shared commodities 18, each respective shared commodity 18 may have a different respective virtual queue 26 (e.g., system 10 may include a plurality of virtual queues 26, with each respective virtual queue 26 corresponding to a different respective shared commodity 18). For example, system 10 may include a general virtual queue 26 for all shared commodities 18 within confined space and/or individual respective virtual queues 26 for each respective shared commodity 18. In cases where individual 12 requests a specific shared commodity 18 (e.g., one having a specific feature that other shared commodities 18 within confined space 14 do not include), that individual 12 may be placed in the respective virtual queue 26 for the specific shared commodity 18 requested. In cases where individual 12 does not indicate a preference, or simply indicates that they wish to use the first available shared commodity 18, individual 12 may be placed in a general virtual queue 26 for all shared commodities 18 within confined space 14.

System 10 may be configured to assign a respective individual 12 requesting to use shared commodity 18 to a position in one virtual queue 26 from among the plurality of virtual queues 26 for the plurality of respective shared commodities 18 within the confined space 14. In such examples, system 10 may be configured to notify individual 12 of which respective shared commodity 18 to use from among the plurality of shared commodities 18 within confined space 14 when it is their turn to use a respective shared commodity 18. In some examples, system 10 is configured to select a respective shared commodity 18 among the plurality of shared commodities 18 within confined space 14, in response to the request by individual 12, with said selected shared commodity 18 being chosen by analyzing movements of individual 12 relative to the other individuals within confined space 14, performing path planning analysis, maximizing space between respective individuals 12, limiting contact between respective individuals 12, and/or minimizing wait time. For example, system 10 may be configured to assign a respective shared commodity 18 at the front of confined space 14 to individuals 12 in assigned locations 16 within the front half of confined space 14, and configured to assign a different respective shared commodity 18 at the rear of confined space 14 to individuals 12 in assigned locations 16 within the rear half of confined space 14, unless one or more other factors weigh in favor of assigning such individuals 12 to a respective shared commodity 18 that is not necessarily the closest one to their assigned location 16.

Additionally or alternatively, system 10 may be configured to perform analysis to limit or avoid contact between individuals 12 moving towards respective shared commodities 18. In a specific illustrative example, if individual 12a is notified that it is their turn to use shared commodity 18a and individual 12b is next in line to use shared commodity 18b, system 10 may be configured to wait to notify individual 12b that it is their turn to use shared commodity 18b until after individual 12a has entered shared commodity 18a, such that individual 12a and individual 12b are not both walking through aisle 22 at the same time. In this manner, and in performing other movement and path planning analysis, system 10 may be configured to ensure that each individual 12 has sufficient space to move within confined space 14, before notifying individual 12 that they may use a given shared commodity 18. To aid in such path planning and movement analysis, system 10 may include one or more cameras or other sensors 31 to indicate when one or more individuals 12 may be moving in or blocking aisle 22. System 10 thus may be configured to wait to notify a given individual 12 that it is their turn to use a given shared commodity 18 until aisle 22 and/or other spaces within confined space 14 are clear from other individuals 12. In this manner, system 10 may take space into account when assigning individuals 12 to a spot in virtual queue 26 and/or when selecting which shared commodity 18 among a plurality of shared commodities 18 to assign a respective individual 12 to, because system 10 may be configured to know where in confined space 14 individual 12 is (e.g., the respective assigned location 16), which commodity location 20 is most efficient to go to for that individual 12, when it is most efficient for that individual 12 to use shared commodity 18, and thus control movement and timing of multiple individuals 12 moving throughout confined space 14, in order to improve social distancing and avoid lines and waiting in aisle 22.

Some examples of system 10 are configured to accept pausing, overriding, or suspension of virtual queue 26, such as by a crew member or personnel working within confined space 14. For example, in the case of a passenger aircraft confined space 14, crew members may disable virtual queue 26 when they wish to keep aisles completely clear, such as during in-flight food and beverage service times, and/or during expected turbulence. In other examples, crew members may disable virtual queue 26 in the event of a system error, during certain time periods (e.g., takeoff and landing), or to reserve use of shared commodity 18 for pilots or other crew members. When system 10 is disabled or overridden by crew members within confined space 14, system 10 may prevent individuals 12 from submitting requests to use shared commodity 18 and thereby prevent adding individuals 12 to virtual queue 26. In some examples, crew members (e.g., flight personnel) can use a screen or monitor within confined space 14 to pause availability of virtual queue 26, such as by inputting a unique code to gain access to administrative controls of virtual queue 26. Additionally or alternatively, systems 10 may be configured such that crew members may pause and/or control availability of virtual queue 26 by using a mobile device (e.g., a smart tablet or other device), which also may include administrative functionality for other systems of confined space 14 (e.g., other in-flight systems). Additionally or alternatively, when system 10 is disabled or overridden by crew members within confined space 14, system 10 may cease providing notifications to individuals 12 that it is their turn to use shared commodity 18. In other words, in some examples, system 10 may simply be paused to prevent individuals 12 from moving to commodity location 20 while system 10 is paused, though system 10 may be configured to maintain the existing virtual queue 26 such that once a crew member resumes or re-enables system 10, the preexisting virtual queue 26 goes back into effect and individuals 12 thus maintain their spot within the sequential listing of entries of virtual queue 26. In this manner, pausing or overriding system 10 may improve safety and convenience for crew members and individuals 12 alike, within confined space 14.

When system 10 notifies a respective individual 12 that it is their turn to use shared commodity 18, system 10 may be configured to provide them with an option to accept, defer, or cancel the request. The respective individual 12 may be automatically removed from virtual queue 26 if the request is not accepted or deferred within a threshold time period after being notified that it is their turn to use shared commodity 18. Once individual 12 accepts their turn in response to the notification that shared commodity 18 is ready for them, system 10 may be configured to provide access instructions and/or an access code that individual 12 may use to access shared commodity 18. In some examples, if individual 12 elects to defer or cancel their request, or fails to accept or confirm the request when it is their turn, system 10 would not provide individual 12 with access instructions or a needed access code to use shared commodity 18, and thus individual 12 would be restricted from (e.g., unable to) access shared commodity 18, and would forfeit their place in virtual queue 26.

System 10 may be configured to notify a crew member when the respective individual 12 at the top of the sequential listing of entries in virtual queue 26 requires shared commodity 18 to be specially prepared. Such systems 10 may improve privacy for such individuals 12, who previously may have needed to use their call buttons or otherwise alert a crew member come to them to discuss their needs. Instead of communicating these needs to crew members in front of other passengers, such individuals 12 may be able to privately enter these special needs via input device 24 as an additional input.

Some systems 10 may be configured to trigger an automated cleaning process of shared commodity 18. Such automated cleaning processes may be triggered after each respective individual 12 finishes using shared commodity 18, after a predetermined number of individuals 12 have used shared commodity 18, after a predetermined amount of time has passed since the last cleaning, and/or when a respective individual 12 or crew member indicates that shared commodity 18 is in need of cleaning.

System 10 may be configured to collect data on the use of shared commodity 18. For example, system 10 may be configured to collect data regarding the additional inputs and/or other preferences of the plurality of individuals 12 that are submitted when the individuals submit requests to use shared commodity 18. Additionally or alternatively, system 10 may be configured to collect data regarding cumulative usage time and frequency of individuals 12 using shared commodity 18. Such data may be collected to, for example, inform an amount of supplies to have on hand for use of shared commodity 18. Additionally or alternatively, system 10 may be configured to monitor one or more commodity sensors 32 within shared commodity 18 to detect when replacements and/or repairs are needed in shared commodity 18. Additionally or alternatively, system 10 may be configured to monitor occupancy of shared commodity 18. Additionally or alternatively, system 10 may be configured to analyze historical data regarding usage of the shared commodity 18, and such historical data may be used to inform assignment of the individual 12 to their position in virtual queue 26. For example, systems 10 may utilize newly collected data and/or historical (e.g., previously collected) data to inform where to position a respective individual 12 in virtual queue 26, which shared commodity 18 to assign to the respective individual 12, which path to instruct the respective individual 12 to take to shared commodity 18, when to notify the respective individual 12 that it is their turn to access shared commodity 18, and so on.

Virtual queue 26 may take the form of software or an app running on at least one processing unit contained within confined space 14. In some examples, virtual queue 26 may be stored in the cloud and/or may be software or an app running on a device located remotely from confined space 14. Each input device 24 is operatively coupled to virtual queue 26, such that virtual queue 26 (e.g., the at least one processing unit producing virtual queue 26) is configured to receive inputs and requests from individuals 12 via input device 24. Similarly, virtual queue 26 is configured to send information to one or more respective input devices 24 within confined space 14, to notify respective individuals 12 of their respective estimated wait times, and when it is their respective turn to use shared commodity 18. In some systems 10, all input devices 24 within confined space 14 are operatively coupled to a single virtual queue 26. In some systems 10, some input devices 24 are operatively coupled to a first virtual queue 26, while other input devices 24 are operatively coupled to a second virtual queue 26. In some systems 10, all input devices 24 are operatively coupled to a plurality of virtual queues 26. Such operative connection between virtual queue 26 and input devices 24 is generally an operative connection that allows for electronic signals to be sent between virtual queue 26 and input devices 24, with said connection being wireless in some examples, or a wired connection. Virtual queue 26 also may be operatively coupled to access hardware 28 such that virtual queue 26 can send signals to access hardware 28 (e.g., to update the access code that should be accepted such that the next individual 12 may use shared commodity 18 with a different access code than was used by the previous individual 12), and vice versa (e.g., to send signals from shared commodity 18 regarding status and whether it is occupied).

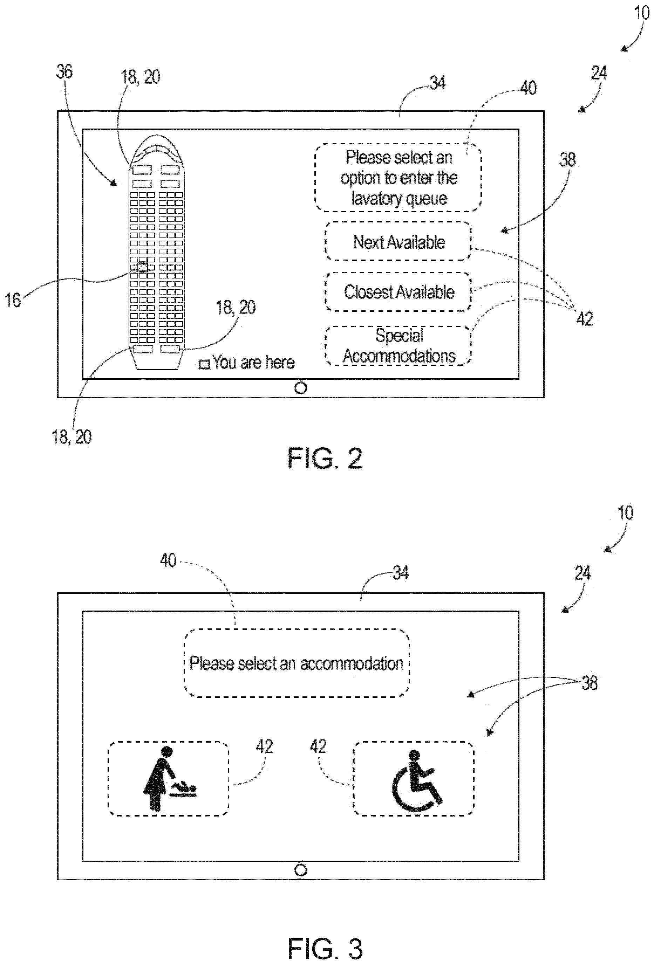

Turning now to Figs. 2-4, illustrative non-exclusive examples of systems 10 or components thereof are illustrated. Where appropriate, the reference numerals from the schematic illustration of Fig. 1 are used to designate corresponding parts in Figs. 2-4; however, the examples of Figs. 2-4 are non-exclusive and do not limit systems 10 to the illustrated examples. That is, systems 10 are not limited to the specific examples illustrated in Figs. 2-4, and systems 10 may incorporate any number of the various aspects, configurations, characteristics, properties, etc. that are illustrated in and discussed with reference to the schematic representation of Fig. 1 and/or the examples of Figs. 2-4, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to each of Figs. 2-4; however, it is within the scope of the present disclosure that the previously discussed features, variants, etc. may be utilized with these examples.

Fig. 2 illustrates an example of a portion of a user interface 34 of system 10. User interface 34 may be displayed to individual 12 (Fig. 1) via input device 24. User interface 34 may display an image, map, or other depiction 36 of the layout of confined space 14 (Fig. 1). Depiction 36 generally indicates assigned location 16 of the respective individual 12 interacting with user interface 34, as well as commodity location or locations 20 of shared commodity or commodities 18. Via user interface 34 on input device 24, individual 12 may submit a request to use shared commodity 18, thereby being placed in virtual queue 26 (Fig. 1). User interface 34 is but an illustrative example of the multitude of options for allowing individuals 12 to submit a request to use shared commodity 18 - other examples of user interface 34 may include more or fewer options, depictions, information, etc., as desired or useful for particular applications. In the present example, once individual 12 has indicated a desire to use shared commodity 18, depiction 36 is displayed to individual 12 via input device 24, along with a plurality of options which are displayed as selections 38 for individual 12 to choose among. For example, displayed selections 38 may include an instruction or question 40, along with one or more choices 42. In the illustrated example, instruction 40 requests that individual 12 make a selection between two choices 42, namely the shared commodity 18 that is next available, or the shared commodity 18 that is closest to the respective individual 12 (e.g., closest to the respective assigned location 16 of the respective individual 12). Choices 42 also include an option for individual 12 to indicate a request for special accommodations in this example.

To interact with user interface 34, as is well known in the art, individual 12 may simply touch the desired choice button 42 (e.g., in the case of input device 24 including a touch screen user interface 34), individual 12 may key in responses to user interface 34 via input device 24, and/or individual 12 may respond to user interface 34 queries via a mobile app or other device.

As a further illustrative example of user interface 34, Fig. 3 illustrates another display screen of user interface 34. In other words, input device 24 may be configured to display a plurality of different display screens, which collectively serve as user interface 34. In the display screen shown in Fig. 3, user interface 34 provides options to an individual 12 who has requested special accommodations (e.g., via the special accommodations choice 42 shown in Fig. 2). As shown in Figs. 2-3, displayed selections 38 (e.g., instructions 40 and choices 42) may be displayed verbally (e.g., in text) and/or via images or icons. Additionally or alternatively, displayed selections 38 may be presented to individual 12 via audio (e.g., recorded voiced options). In the example of Fig. 3, instructions 40 are displayed as text, whereas response choices 42 are displayed as icons. To request use of a respective shared commodity 18 having the desired special accommodation (e.g., in the case where confined space 14 includes a plurality of shared commodities 18, but only a subset of the plurality of shared commodities 18 has a particular special accommodation available), individual 12 simply interacts with user interface 34 of system 10 to indicate such a request. For example, if individual 12 wishes to use a respective shared commodity 18 having a changing table, individual 12 would indicate as much by pressing the respective choice 42 illustrating a changing table icon, and individual 12 would then be placed in the respective virtual queue 26 for the respective shared commodity 18 having a changing table.

Once individual 12 is placed in virtual queue 26, system 10 may be configured to send information to individual 12 via input device 24 and/or user interface 34. For example, user interface 34 may display a confirmation to individual 12 that they were placed in virtual queue 26, an indication of which shared commodity 18 from among a plurality of shared commodities 18 individual 12 will be assigned to, an estimated wait time, and/or information pertaining to the number of other individuals ahead of individual 12 in virtual queue 26. Other relevant information may be provided to individual 12 as well. In some examples, input device 24 also may serve as an entertainment device, in which case user interface 34 may display entertainment (e.g., movies, shows, or puzzles) or other functionality during the time that individual 12 is waiting their turn in virtual queue 26. In some examples, input device 24 displays information to individual 12 regarding their position in virtual queue 26 even when input device 24 is displaying entertainment or other information. For example, input device 24 may be configured to play a movie for individual 12, which may continue to play while individual 12 is waiting in virtual queue 26, and input device 24 may still indicate an estimated wait time (and/or other information) while the movie plays on input device 24 as well.

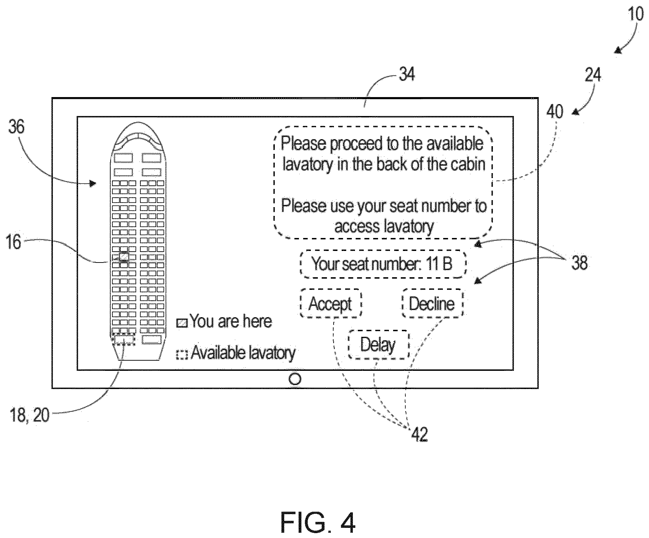

System 10 is configured to notify individual 12 when it is their turn to use shared commodity 18. For example, input device 24 may notify individual 12 when they are at or near the top of the sequential listing of entries of virtual queue 26. Such notifications may be a sound indication (e.g., an alarm or chime or other auditory alert), a visual indication (e.g., a notification message or blinking light), and/or a haptic or tactile indication (e.g., vibration of input device 24). As an illustrative, non-exclusive example, Fig. 4 illustrates an example of system 10 notifying individual 12 that it is their turn to use shared commodity 18, via user interface 34 of input device 24. If input device 24 was off or used for a different purpose during the waiting time (e.g., if input device 24 was used for entertainment while individual 12 was waiting in virtual queue 26), either input device 24 may automatically switch the display from the entertainment to the notification about virtual queue 26, or input device 24 may display a visual indication to individual 12, who then may manually opt to view and/or respond to the visual indication regarding virtual queue 26. In the example of Fig. 4, user interface 34 displays information on input device 24 when it is a respective individual's turn to use shared commodity 18. For example, input device 24 may display information 40 to individual 12 that it is their turn to use shared commodity 18, which shared commodity 18 to use, and/or access instructions for accessing shared commodity 18. For example, input device 24 may provide information to individual 12 such as an access code for accessing shared commodity 18, which generally is not provided to individual 12 until it is their turn to use shared commodity 18, to prevent individuals 12 from using shared commodity 18 out of turn. In the specific example of Fig. 4, information 40 includes an indication of assigned location 16 of individual 12 (e.g., the assigned seat number), which may be used as an access code when it is their turn to use shared commodity 18. In other examples, other access codes may be provided to individual 12, or other procedures may be communicated to individual 12 to access shared commodity 18.

Such notification to individual 12 also may request interaction from individual 12 to maintain their time to use shared commodity. For example, user interface 34 of Fig. 4 includes three choices 42, for individual to accept, delay, or cancel their turn to use shared commodity 18. In some systems 10, individual 12 must confirm or accept their intention to use shared commodity 18 within a predetermined threshold time period, or forfeit their spot in virtual queue 26, at which point the respective individual 12 next in line in the sequential listing of entries of virtual queue 26 will be notified that it is their turn to use shared commodity 18.

When notifying individual 12 that it is their turn to use shared commodity 18, input device 24 may display a depiction 36 (e.g., a map, or layout) of confined space 14, which may highlight or indicate the respective assigned location 16 of the respective individual 12 whose turn it is to use shared commodity 18. Said depiction 36 also may indicate or highlight commodity location 20 of the respective shared commodity 18 that individual 12 is to use. In other words, if confined space 14 includes a plurality of shared commodities 18, system 10 may be configured to instruct individual 12 which specific shared commodity 18 they are to use, from among the plurality of shared commodities 18. In some examples, depiction 36 may indicate the appropriate or desired path, or route, for individual 12 to follow within confined space 14, between their assigned location 16 and commodity location 20 of the respective shared commodity 18 they are to use. For example, in larger aircraft with multiple aisles and/or multiple passenger cabin sections, there may be multiple different paths a given individual 12 could take to get from their seat to shared commodity 18. In such instances, system 10 may be configured to calculate the most efficient path, or the path that will most limit interaction between individuals, thereby improving the practice of social distancing within confined space 14. To this end, in a specific example, system 10 may instruct a first individual 12 to travel in a first direction towards a first shared commodity 18, while instructing a second individual 12 (whose turn to use a different respective shared commodity 18 may occur at the same, or close to the same time, as the first individual 12) to travel in a second, different, direction towards a second shared commodity 18, such that the first and second individuals 12 do not cross paths on their way to the respective shared commodities 18.

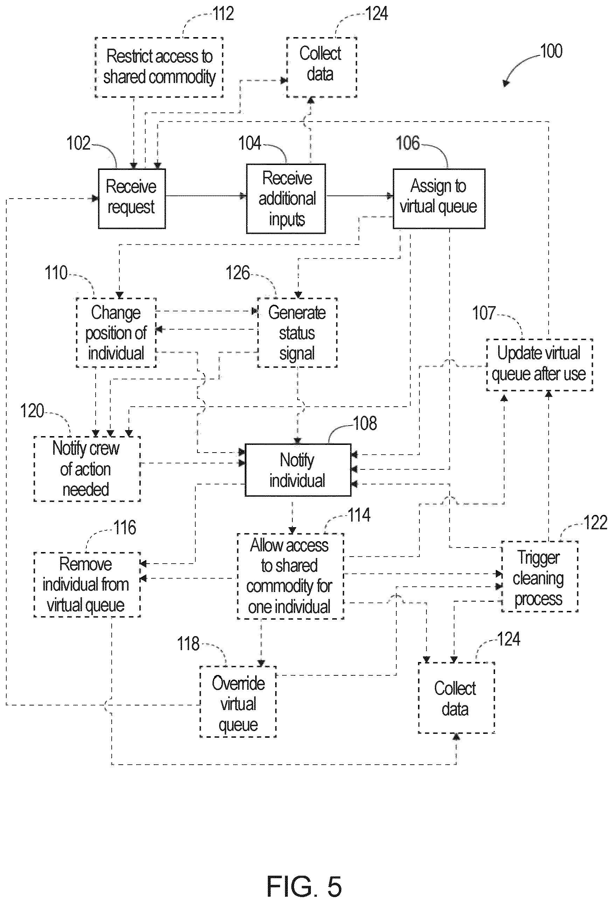

Fig. 5 schematically provides a flowchart that represents illustrative, non-exclusive examples of methods 100 according to the present disclosure. In Fig. 5, some steps are illustrated in dashed boxes indicating that such steps may be optional or may correspond to an optional version of a method according to the present disclosure. That said, not all methods 100 according to the present disclosure are required to include the steps illustrated in solid boxes. The methods and steps illustrated in Fig. 5 are not limiting and other methods and steps are within the scope of the present disclosure, including methods having greater than or fewer than the number of steps illustrated, as understood from the discussions herein.

As shown in Fig. 5, methods 100 of regulating movement of a plurality of individuals (e.g., individuals 12) within a confined space (e.g., confined space 14) generally include receiving a request from an individual to use a shared commodity (e.g., shared commodity 18) at 102, receiving additional inputs from the individual at 104, assigning the individual to a position in a virtual queue (e.g., virtual queue 26) for the shared commodity at 106, and notifying the individual when it is the individual's turn to use the shared commodity at 108. As in systems 10 described above in connection with Fig. 1, each individual is generally given an assigned location (e.g., assigned location 16) within the confined space, while the shared commodity is generally statically positioned in a commodity location (e.g., commodity location 20) within the confined space, such that the individual must move from their assigned location to the commodity location to use the shared commodity. Assigning the individual to a position in the virtual queue at 106 includes assigning the individual to a position among a sequential listing of entries in the virtual queue, with the selection of the position being based on the request (e.g., the existence of the request, and the timing of the request relative to other requests received from other individuals wishing to use the shared commodity), the additional inputs provided by the individual, a layout of the confined space, the assigned location of the individual, and/or the commodity location of the shared commodity. As each subsequent individual takes their respective turn to use the shared commodity, the virtual queue is updated at 107, such that other individuals move up in the sequential listing of entries in the virtual queue. As each respective individual reaches the top of the sequential listing of entries of the virtual queue (i.e., it is that individual's turn to use the shared commodity), the system then notifies the respective individual that it is their turn at 108.

In examples where the confined space includes a plurality of shared commodities, assigning the individual to a position in a virtual queue at 106 may include assigning the individual to the position in one virtual queue from among a plurality of virtual queues for the plurality of respective shared commodities within the confined space. For example, each respective shared commodity may have its own respective virtual queue, and presently disclosed systems may be configured to assign each individual to one of the virtual queues based on the individual's preferences and/or other considerations (e.g., relative locations of the individual's assigned location and the commodity locations of the various shared commodities). Similarly, assigning the individual to a position in a virtual queue at 106 may include selecting a respective shared commodity among the plurality of shared commodities within the confined space, in response to the individual's request, wherein the selecting the respective shared commodity comprises analyzing movements of the individual relative to the other individuals within the confined space, path planning analysis, maximizing space between respective individuals, limiting contact between respective individuals, and/or minimizing wait time. In these methods 100, notifying the individual at 108 may include notifying the individual of which respective shared commodity to use from among the plurality of shared commodities within the confined space

Assigning the position in the virtual queue at 106 may, as a base rule, follow a first come-first served sequence. In other words, without any other factors at play, Individual A would be higher than Individual B on the sequential listing of entries of the virtual queue, if Individual A submitted their request to use the shared commodity before Individual B submitted their request to use the shared commodity. However, the relative positions of Individual A and Individual B may be altered by the system, based on a number of considerations, when assigning positions in the virtual queue at 106. For example, additional inputs received by the system may cause the system to adjust the relative priority of the two individuals' requests to use the shared commodity. In other words, assigning the individual to the position in the virtual queue at 106 may be based on one or more priority rules. For example, additional inputs such as the age, special accommodations, and/or pertinent medical conditions of the individual may cause the system to give that individual a higher priority, and thus move that individual higher up in the virtual queue. Such additional inputs may be entered directly by the individual at the time the request to use the shared commodity is submitted, otherwise obtained from the individual, or may be received from a database of passenger profiles that contains any relevant information for the additional inputs to the system. Additionally or alternatively, priority rules for assigning individuals to positions in the virtual queue at 106 may be based at least in part on the assigned location of the individual. For example, in a confined space with differentiated sections (e.g., first class, business class, etc.) located in different portions or regions of the confined space, those individuals located in one section may be given different priority than those individuals located in another section.

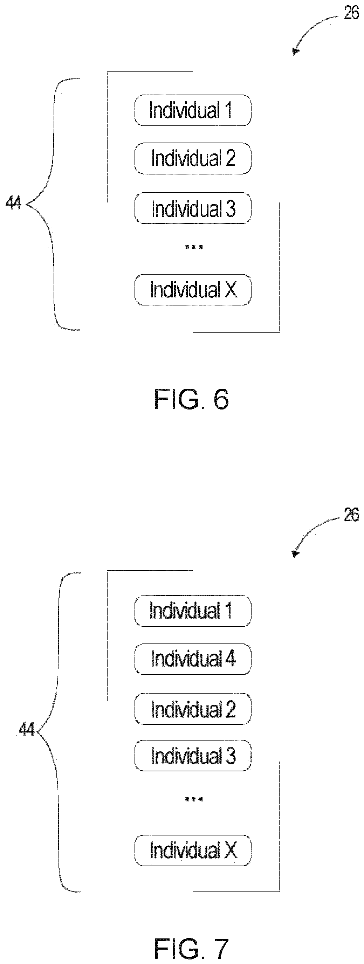

In some examples of method 100, the position of a respective individual in the virtual queue may be changed at 110, after initially being assigned to a position in the virtual queue at 106. Such changes in position at 110 may be in response to subsequent requests from other individuals, and/or to changes in the confined space or other situational changes that may necessitate a change in position of an individual in the virtual queue. For example, Figs. 6-7 schematically illustrate two examples of sequential listings of entries 44 of virtual queue 26. Fig. 6 illustrates the sequential listing of entries 44 of individuals in virtual queue 26 at a first time, and includes a plurality of individuals (e.g., Individual 1, Individual 2, Individual 3, and so on, to the last individual in sequential listing of entries 44, namely Individual X). The sequential listing of entries 44 is sequential in the sense that the entry at the top of virtual queue 26 (e.g., Individual 1) is next to use the shared commodity, while the individual in the second position in the sequential listing of entries 44 (e.g., Individual 2) is next in line to use the shared commodity, and so on. However, before an individual's turn to use the shared commodity, the ordering of the sequential listing of entries 44 may be changed, so as to change the relative position of individuals within virtual queue 26, at 110. For example, as shown in Fig. 7, which illustrates sequential listing of entries 44 of virtual queue 26 at a later time than is shown in Fig. 6, if a new individual (e.g., Individual 4) submits a request to use the shared commodity and has a higher priority than other individuals currently in virtual queue, Individual 4 may be placed higher up in sequential listing of entries 44, effectively "cutting in line" in front of existing individuals in virtual queue 26. For example, Individual 4 was placed in position 2 in sequential listing of entries 44 in Fig. 7, ahead of Individual 2 and Individual 3, who were previously in virtual queue 26 higher up sequential listing of entries. But the positioning of Individual 4 at the second spot in sequential listing of entries 44 may change the position of Individuals 2 and 3, pushing them further down in virtual queue 26. Such assigning positions at 106 and changing positioning at 110 may be warranted due to, for example, the relative ages of the individuals, pertinent medical conditions of one or more individuals, or other considerations taken into account by the system.

With continued reference to Fig. 5, notifying the individual at 108 may include notifying the individual of a current status of the shared commodity, such as notifying the individual of the number of entries ahead of the position of the individual in the sequential listing of entries, and/or notifying the individual of an estimated wait time until the individual may use the shared commodity. Notifying the individual at 108 generally also includes providing access instructions to the individual for accessing the shared commodity. For example, providing access instructions may include providing an access code and/or providing a QR code that may be used to access the shared commodity. Additionally or alternatively, providing access instructions may include sending access instructions to a mobile app, an in-flight entertainment monitor, a handheld device, and/or a personal device of the individual, any of which may be the input device used to submit the initial request, or which may be separate from the input device. For example, an individual may submit a request to use a shared commodity via an input device in the form of a fixed monitor (e.g., an in-flight entertainment display) at their assigned location, and then receive the notification that it is their turn, and the relevant access instructions, via a different device, such as a mobile app on their mobile phone that they may take with them to the commodity location to access the shared commodity. For example, a QR code may be provided to the individual's mobile phone when it is their turn to use the shared commodity, and the individual may scan the QR code at the commodity location to gain access to the shared commodity, in a specific example.

Additionally or alternatively, notifying the individual at 108 may include providing an option to accept, defer, or cancel the individual's request to use the shared commodity. If the individual does not respond to any of the options to accept, defer, or cancel their request within a predetermined amount of time, the individual may be automatically removed from the virtual queue, at 116. An individual will also be automatically removed from the virtual queue at 116 after that individual has finished using the shared commodity, so that the next individual in the sequential listing of entries may move up and be notified that they may now use the shared commodity.

Additionally or alternatively, notifying the individual at 108 may include ensuring that the individual has sufficient space to move within the confined space, before actually notifying the individual that they may use the shared commodity. For example, the system may be configured to limit or prevent multiple individuals from lining up or accumulating in an aisle or other shared space within the confined space. Additionally or alternatively, the system may be configured to limit or prevent individuals from crossing paths with each other en route to multiple shared commodities. To this end, notifying the individual at 108 that it is their turn to use a shared commodity may include notifying the individual of which shared commodity to use from among a plurality of shared commodities. In so doing, disclosed systems may be configured to consider pathways to a number of shared commodities and optimize paths for social distancing between individuals. Notifying a respective individual at 108 also may include instructing the individual of which route or path to take to the shared commodity, from among a plurality of possible paths between the individual's assigned location and the commodity location of the assigned shared commodity.

Some methods 100 include restricting access to the shared commodity for the individuals within the confined space at 112, other than for the respective individual whose position is at the top of the sequential listing of the virtual queue. Along these lines, methods 100 also may include allowing access to the shared commodity by the respective individual whose position is at the top of the sequential listing of the virtual queue at 114. This may be accomplished, for example, by automatically locking a door to the shared commodity, or otherwise preventing access to the shared commodity by default, and providing the ability to access the shared commodity to just one individual at a time, such as by providing access instructions or an access code to just the individual whose turn it is to use the shared commodity. In some examples, allowing access to the shared commodity at 114 is triggered by an access code entered on a keypad, a mobile app, a camera, an electronic display unit, a barcode scanner, a mechanical switch, voice recognition, and/or a sensor. Restricting access to the shared commodity at 112 may be accomplished by automatically locking a door to the shared commodity after an individual accesses the shared commodity, and/or after the individual has finished using the shared commodity and leaves the commodity location,

Methods 100 may include overriding or suspending operation of the virtual queue at 118. For example, a crew member may turn off the virtual queue system, thereby preventing individuals from requesting to use the shared commodity at certain times and/or preventing individuals from being permitted access to the shared commodity. For example, on a passenger flight with food or beverage service, the virtual queue system may be disabled at 118 during the service, to allow for safe passage by crew members through the aisles by keeping individuals at their assigned location rather than permitting them to move about within confined space to the commodity locations. In turn, methods 100 also may include reenabling or unpausing the system by crew members, such that individuals within the confined space may again submit requests to use a shared commodity, be placed in the virtual queue, and be notified when it is their turn to use the shared commodity.

Methods 100 may include notifying a crew member that an action is needed, at 120. For example, if an individual who has submitted a request to use the shared commodity requires any sort of special preparation to be taken with respect to the shared commodity before the individual uses the shared commodity, the system may be configured to notify the crew of the same, before notifying the individual that they may use the shared commodity at 108. For example, some shared commodities, such as certain aircraft lavatories, may be reconfigurable to accommodate an individual having reduced mobility. Thus, if a crew member is notified at 120 that such a reconfiguration has been requested, they may reconfigure the shared commodity (e.g., the lavatory) when needed, at which point the crew member can indicate to the system that the shared commodity is ready for use, and the individual may be notified at 108 that the shared commodity is ready for their use. In this manner, individuals may enjoy more privacy when requesting special accommodations.

Some methods 100 include triggering an automated cleaning process at 122 to clean the shared commodity. For example, the shared commodity may be cleaned after each individual uses the shared commodity, after a predetermined number of individuals have used the shared commodity, after a predetermined amount of time, and/or at other times when an individual or crew member indicates that the shared commodity needs to be cleaned. In some methods 100, the automated cleaning process may be triggered at 122 before notifying the next individual in the virtual queue that it is their turn to use the shared commodity at 108. Such automated cleaning may be, for example, a chemical or UV cleanse of the shared commodity.

Methods 100 may include collecting data at 124. For example, disclosed systems may be configured to collect data relating to additional inputs or other preferences of individuals who submit requests to use the shared commodity. Such data collecting at 124 is not tied to any individuals, but rather can include anonymous data relating to the age of individuals requesting to use the shared commodity, and/or the number of requests that include a special accommodation. Additionally or alternatively, collecting data at 124 may include collecting data regarding use time and frequency of the shared commodity. For example, the system may be configured to record the duration of each use of the shared commodity, the number of times a shared commodity was used during a given time period, and/or the amount of supplies consumed during use of the shared commodity, which may, for example, help inform an amount of supplies to have on hand for use of the shared commodity in the future. In some examples, collecting data at 124 may include monitoring one or more sensors within the shared commodity to detect when replacements and/or repairs are needed in the shared commodity, and/or monitoring occupancy of the shared commodity. Additionally or alternatively, collecting data at 124 may include analyzing historical data regarding usage of the shared commodity. In some examples, the historical data may inform the assigning the individual to the position at 106 and/or the notifying the individual at 108. As an illustrative example in the case of a lavatory on a passenger aircraft, such historical data may include data from previous flights, data from other routes, data from other aircraft, data from passenger experiences, passenger profile data, and/or passenger feedback data. Presently disclosed systems may receive such historical data as an input

In methods 100, receiving the request at 102, receiving additional inputs at 104, assigning the individual to a position in the virtual queue at 106, and/or notifying the individual at 108 may be automated. For example, at least one processing unit on board the confined space may perform these functions without the need for crew member involvement.

Methods also may include generating a status signal regarding the shared commodity, at 126. Generating the status signal at 126 generally is performed automatically, such as by at least one processing unit within the confined space. Generating the status signal at 126 may include generating a signal with information on a locking status of the door of the shared commodity, information on an open status of the door of the shared commodity, information on a closed status of the door of the shared commodity, information on a readiness of the shared commodity, status information regarding cleaning of the shared commodity, status information regarding a current configuration of the shared commodity, and/or status information regarding preparation of the shared commodity to accommodate passenger needs. For example, disclosed systems may be configured to generate a status signal automatically once the door to the shared commodity is opened and again once the door to the shared commodity is closed. Such status signals may be stored in the system and used to analyze use of the shared commodity and update the virtual queue at 107.

Illustrative, non-exclusive examples of inventive subject matter according to the present disclosure are described in the following enumerated paragraphs:
A1. A method (100) of regulating movement of a plurality of individuals (12) within a confined space (14), wherein each individual (12) is given an assigned location (16) within the confined space (14), the method (100) comprising:
   receiving (102) a request from an individual (12) of the plurality of individuals (12) to use a shared commodity (18), wherein the shared commodity (18) is statically positioned in a commodity location (20) within the confined space (14), and wherein the individual (12) must move from the individual's (12) assigned location (16) to the commodity location (20) to access the shared commodity (18);
   receiving (104) additional inputs from the individual (12) pertaining to the request;
   assigning (106) the individual (12) to a position in a virtual queue (26) for the shared commodity (18), wherein the virtual queue (26) comprises a sequential listing of entries (44), wherein the assigning (106) is based on the request, the additional inputs, a layout of the confined space (14), the assigned location (16) of the individual (12), and the commodity location (20); and
   notifying (108) the individual (12) that the individual (12) may use the shared commodity (18), when the position of the individual (12) in the virtual queue (26) reaches a top of the sequential listing of entries (44) of the virtual queue (26).
A1.1. The method (100) of paragraph A1, wherein the receiving (102) the request, the receiving (104) additional inputs, the assigning (106) the individual (12), and the notifying (108) the individual (12) are automated.
A1.2. The method (100) of paragraph A1 or A1.1, wherein the receiving (102) the request, the receiving (104) additional inputs, the assigning (106) the individual (12), and the notifying (108) the individual (12) are performed by at least one processing unit contained within the confined space (14).
A2. The method (100) of any of paragraphs A1-A1.2, further comprising changing (110) the position of the individual (12) in the virtual queue (26) in response to a second request from a second individual (12) of the plurality of individuals (12) to use the shared commodity (18).
A3. The method (100) of any of paragraphs A1-A2, wherein the assigned location (16) for each individual (12) of the plurality of individuals (12) is a seat assignment.
A4. The method (100) of any of paragraphs A1-A3, wherein the confined space (14) comprises an aircraft, a passenger train, or a passenger bus.
A5. The method (100) of any of paragraphs A1-A4, further comprising notifying (108) the individual (12) of a current status of the shared commodity (18), after the receiving (102) the request from the individual (12).
A6. The method (100) of paragraph A5, wherein the notifying (108) the individual (12) of the current status comprises notifying the individual (12) of a number of entries ahead of the position of the individual (12) in the sequential listing of entries (44) and/or notifying the individual (12) of an estimated wait time until the individual (12) may use the shared commodity (18).
A7. The method (100) of any of paragraphs A1-A6, wherein the shared commodity (18) comprises a lavatory.
A8. The method (100) of any of paragraphs A1-A7, wherein the shared commodity (18) is configured to be used by one individual (12) at a time.
A9. The method (100) of any of paragraphs A1-A8, further comprising restricting access (112) to the shared commodity (18) for all individuals (12) of the plurality of individuals (12) except for a respective individual (12) whose position is at the top of the sequential listing of the virtual queue (26).
A9.1. The method (100) of any of paragraphs A1-A9, further comprising allowing access (114) to the shared commodity (18) by a/the respective individual (12) whose position is at the top of the sequential listing of entries (44) of the virtual queue (26).
A9.2. The method (100) of paragraph A9.1, wherein the allowing access (114) to the shared commodity (18) is triggered by an access code entered on a keypad, a mobile app, a camera, an electronic display unit, a barcode scanner, a mechanical switch, voice recognition, and/or a sensor.
A10. The method (100) of any of paragraphs A1-A9.2, wherein the assigning (106) the individual (12) to the position in the virtual queue (26) is based on one or more priority rules.
A11. The method (100) of paragraph A10, wherein the one or more priority rules are configured to assign different positions to different individuals (12) of the plurality of individuals (12), based on information obtained from the additional inputs from the individual (12).
A12. The method (100) of paragraph A10 or A11, wherein the one or more priority rules are configured to assign different positions to different individuals (12) of the plurality of individuals (12), based on the assigned location (16) of the individual (12).
A13. The method (100) of any of paragraphs A10-A12, wherein the one or more priority rules are configured to assign different positions to different individuals (12) of the plurality of individuals (12), based on an age of the individual (12) submitting the request, a medical condition of the individual (12), and/or a special accommodation requested by the individual (12).
A13.1. The method (100) of any of paragraphs A1-A13, wherein the additional inputs comprise an/the age of the individual (12) submitting the request, one or more medical conditions of the individual (12), the assigned location (16) of the individual (12), and/or one or more special accommodations requested by the individual (12).
A14. The method (100) of any of paragraphs A1-A13.1, wherein the notifying (108) the individual (12) that the individual (12) may use the shared commodity (18) comprises providing access instructions for accessing the shared commodity (18).
A15. The method (100) of paragraph A14, wherein the providing access instructions comprises providing an/the access code and/or providing a QR code that may be used to access the shared commodity (18).
A16. The method (100) of paragraph A14 or A15, wherein the providing access instructions comprises sending access instructions to a mobile app, an in-flight entertainment monitor, a handheld device, and/or a personal device of the individual (12).
A17. The method (100) of any of paragraphs A1-A16, wherein the shared commodity (18) comprises a door (30) separating the shared commodity (18) from a remainder of the confined space (14), and wherein the method (100) further comprises automatically locking the door (30) after the individual (12) accesses the shared commodity (18).
A17.1. The method (100) of any of paragraphs A1-A17, wherein the shared commodity (18) comprises a/the door (30) separating the shared commodity (18) from a/the remainder of the confined space (14), and wherein the method (100) further comprises automatically locking the door (30) after the individual (12) has finished using the shared commodity (18) and leaves the commodity location (20).
A18. The method (100) of any of paragraphs A1-A17.1, wherein the additional inputs comprise the individual's (12) preferred shared commodity (18) among a plurality of shared commodities (18) in the confined space (14).
A19. The method (100) of any of paragraphs A1-A18, further comprising overriding or suspending operation (118) of the virtual queue (26).
A20. The method (100) of any of paragraphs A1-A19, wherein the notifying (108) the individual (12) comprises providing an option to accept, defer, or cancel the request.
A21. The method (100) of paragraph A20, further comprising automatically removing (116) the individual (12) from the virtual queue (26) if the request is not accepted or deferred within a threshold time period.
A22. The method (100) of any of paragraphs A1-A21, further comprising notifying (120) a crew member when the individual (12) at the top of the virtual queue (26) requires the shared commodity (18) be specially prepared for the individual (12).
A23. The method (100) of any of paragraphs A1-A22, further comprising triggering (122) an automated cleaning process of the shared commodity (18) after the individual (12) has finished using the shared commodity (18).
A24. The method (100) of any of paragraphs A1-A23, further comprising collecting data (124) of additional inputs and/or other preferences of the plurality of individuals (12).
A25. The method (100) of any of paragraphs A1-A24, further comprising collecting data (124) regarding usage time and frequency of the shared commodity (18).
A26. The method (100) of any of paragraphs A1-A25, further comprising collecting data (124) to inform an amount of supplies to have on hand for use of the shared commodity (18).
A27. The method (100) of any of paragraphs A1-A26, further comprising monitoring one or more sensors (31) within the shared commodity (18) to detect when replacements and/or repairs are needed in the shared commodity (18).
A28. The method (100) of any of paragraphs A1-A27, further comprising monitoring occupancy of the shared commodity (18).
A29. The method (100) of any of paragraphs A1-A28, wherein the confined space (14) comprises a plurality of shared commodities (18), wherein each respective shared commodity (18) of the plurality of shared commodities (18) is statically positioned in a different respective commodity location (20) within the confined space (14).
A30. The method (100) of paragraph A29, wherein each respective shared commodity (18) of the plurality of shared commodities (18) has a different respective virtual queue (26).
A31. The method (100) of paragraph A29 or A30, wherein the assigning (106) the individual (12) to the position comprises assigning the individual (12) to the position in one virtual queue (26) from among a plurality of virtual queues (26) for the plurality of respective shared commodities (18) within the confined space (14).
A32. The method (100) of any of paragraphs A1-A31, wherein the notifying (108) the individual (12) comprises notifying the individual (12) of which respective shared commodity (18) to use from among a/the plurality of shared commodities (18) within the confined space (14).
A33. The method (100) of any of paragraphs A1-A32, further comprising selecting a respective shared commodity (18) among a/the plurality of shared commodities (18) within the confined space (14), in response to the request, wherein the selecting the respective shared commodity (18) comprises analyzing movements of the individual (12) relative to the plurality of individuals (12), path planning analysis, maximizing space between respective individuals (12) of the plurality of individuals (12), limiting contact between respective individuals (12) of the plurality of individuals (12), and/or minimizing wait time.
A34. The method (100) of any of paragraphs A1-A33, further comprising ensuring that the individual (12) has sufficient space to move within the confined space (14), before the notifying (108) the individual (12) that the individual (12) may use the shared commodity (18).
A35. The method (100) of any of paragraphs A1-A34, further comprising preventing multiple individuals (12) of the plurality of individuals (12) from lining up or accumulating in an aisle (22) of the confined space (14).
A36. The method (100) of any of paragraphs A1-A35, further comprising analyzing historical data regarding usage of the shared commodity (18), wherein the historical data informs the assigning (106) the individual (12) to the position and the notifying (108) the individual (12).
A37. The method (100) of any of paragraphs A1-A36, further comprising generating (126) a status signal regarding the shared commodity (18).
A38. The method (100) of paragraph A37, wherein the generating (126) the status signal is performed by a/the at least one processing unit.
A39. The method (100) of paragraph A37 or A38, wherein the status signal comprises information on a locking status of a/the door (30) of the shared commodity (18), information on an open status of the door (30) of the shared commodity (18), information on a closed status of the door (30) of the shared commodity (18), information on a readiness of the shared commodity (18), status information regarding cleaning of the shared commodity (18), status information regarding a current configuration of the shared commodity (18), and/or status information regarding preparation of the shared commodity (18) to accommodate passenger needs.
A40. The method (100) of any of paragraphs A1-A39, further comprising receiving historical data as input.
A41. The method (100) of paragraph A40, wherein the historical data comprises data from previous flights, data from other routes, data from other aircraft, data from passenger experiences, passenger profile data, and/or passenger feedback data.
B1. A system (10) for regulating movement of a plurality of individuals (12) within a confined space (14), wherein each individual (12) is given an assigned location (16) within the confined space (14), the system (10) comprising:
   a shared commodity (18), wherein the shared commodity (18) is statically positioned in a commodity location (20) within the confined space (14), and wherein the individual (12) must move from the individual's (12) assigned location (16) to the commodity location (20) to access the shared commodity (18);
   an input device (24) configured to receive a request from one or more individuals (12) of the plurality of individuals (12) to use the shared commodity (18), wherein the input device (24) is further configured to receive additional inputs from the one or more individuals (12) pertaining to the request; and
   a virtual queue (26) for the shared commodity (18), wherein the virtual queue (26) comprises a sequential listing of entries (44) of individuals (12) who have requested to use the shared commodity (18), wherein the individuals (12) who have requested to use the shared commodity (18) are ordered based on profiles of the one or more individuals (12), additional inputs from the one or more individuals (12), a layout of the confined space (14), the assigned locations (16) of the one or more individuals (12), and the commodity location (20), wherein the system (10) is configured to notify a respective individual (12) that the individual (12) may use the shared commodity (18), when the position of the respective individual (12) in the virtual queue (26) reaches a top of the sequential listing of entries (44) of the virtual queue (26).
B2. The system (10) of paragraph B1, wherein the system (10) is configured to change the position of the individual (12) in the virtual queue (26) in response to a second request from a second individual (12) of the plurality of individuals (12) to use the shared commodity (18).
B3. The system (10) of any of paragraphs B1-B2, wherein the assigned location (16) for each individual (12) of the plurality of individuals (12) is a seat assignment.
B4. The system (10) of any of paragraphs B1-B3, wherein the confined space (14) comprises an aircraft, a passenger train, or a passenger bus.
B5. The system (10) of any of paragraphs B1-B4, wherein the system (10) is further configured to notify the one or more individuals (12) of a current status of the shared commodity (18), after the receiving the request from the one or more individuals (12).
B6. The system (10) of paragraph B5, wherein the system (10) is configured to notify the one or more individuals (12) of a number of entries ahead of the position of the respective individual (12) in the sequential listing of entries (44) and/or notifying the respective individual (12) of an estimated wait time until the respective individual (12) may use the shared commodity (18).
B7. The system (10) of any of paragraphs B1-B6, wherein the shared commodity (18) comprises a lavatory.
B8. The system (10) of any of paragraphs B1-B7, wherein the shared commodity (18) is configured to be used by one individual (12) at a time.
B9. The system (10) of any of paragraphs B1-B8, wherein the system (10) is configured to restrict access to the shared commodity (18) for all individuals (12) of the plurality of individuals (12) except for a respective individual (12) whose position is at the top of the sequential listing of entries (44) of the virtual queue (26).
B9.1. The system (10) of any of paragraphs B1-B9, wherein the system (10) is configured to allow access to the shared commodity (18) by a/the respective individual (12) whose position is at the top of the sequential listing of entries (44) of the virtual queue (26).
B9.2. The system (10) of any of paragraphs B1-B9.1, wherein the system (10) is configured to allow access to the shared commodity (18) via an access code.
B9.3. The system (10) of any of paragraphs B1-B9.2, wherein the system (10) is configured to allow access to the shared commodity (18) via a mobile app, voice recognition, a personal device, and/or a handheld device.
B9.4. The system (10) of any of paragraphs B1-B9.3, wherein the system (10) further comprises access hardware (28) configured to allow physical access to the shared commodity (18).
B9.5. The system (10) of paragraph B9.4, wherein the access hardware (28) comprises a keypad, a camera, an electronic display unit, a barcode scanner, a mechanical switch, a handheld device, and/or a sensor.
B9.6. The system (10) of paragraph B9.4 or B9.5, wherein the access hardware (28) is positioned at the commodity location (20).
B10. The system (10) of any of paragraphs B1-B9.6, wherein the system (10) is configured to assign the individual (12) to the position in the virtual queue (26) is based on one or more priority rules.
B11. The system (10) of paragraph B10, wherein the one or more priority rules are configured to assign different positions to different individuals (12) of the plurality of individuals (12), based on information obtained from the additional inputs from the individual (12).
B12. The system (10) of paragraph B10 or B11, wherein the one or more priority rules are configured to assign different positions to different individuals (12) of the plurality of individuals (12), based on the assigned location (16) of the individual (12).
B13. The system (10) of any of paragraphs B10-B12, wherein the one or more priority rules are configured to assign different positions to different individuals (12) of the plurality of individuals (12), based on an age of the individual (12) submitting the request, a medical condition of the individual (12), and/or a special accommodation requested by the individual (12).
B14. The system (10) of any of paragraphs B1-B13, wherein the system (10) is configured to provide access instructions for accessing the shared commodity (18) to the individual (12) when it is the individual's (12) turn to use the shared commodity (18).
B15. The system (10) of paragraph B14, wherein the system (10) is configured to provide an/the access code and/or a QR code that may be used to access the shared commodity (18).
B16. The system (10) of paragraph B14 or B15, wherein the system (10) is configured to send access instructions to a mobile app, an in-flight entertainment monitor, a handheld device, and/or a personal device of the individual (12).
B16.1. The system (10) of any of paragraphs B1-B16, wherein the input device (24) comprises a/the mobile app, an/the in-flight entertainment monitor, a/the handheld device, and/or a/the personal device of the individual (12).
B16.2. The system (10) of any of paragraphs B1-B16.1, wherein the system (10) is configured to notify the respective individual (12) that the individual (12) may use the shared commodity (18), via the input device (24).
B16.3. The system (10) of any of paragraphs B1-B16.2, wherein the input device (24) comprises a plurality of input devices (24), wherein each respective individual (12) of the plurality of individuals (12) has a respective input device (24) of the plurality of input devices (24).
B17. The system (10) of any of paragraphs B1-B16.3, wherein the shared commodity (18) comprises a door (30) separating the shared commodity (18) from a remainder of the confined space (14), and wherein the system (10) is configured to automatically lock the door (30) after the individual (12) accesses the shared commodity (18).
B17.1. The system (10) of any of paragraphs B1-B17, wherein the shared commodity (18) comprises a/the door (30) separating the shared commodity (18) from a/the remainder of the confined space (14), and wherein the system (10) is configured to automatically lock the door (30) after the individual (12) has finished using the shared commodity (18) and leaves the commodity location (20).
B17.2. The system (10) of any of paragraphs B1-B17.1, wherein the shared commodity (18) comprises a/the door (30) separating the shared commodity (18) from a/the remainder of the confined space (14), wherein the system (10) further comprises an interior locking mechanism within the shared commodity (18), such that the individual (12) using the shared commodity (18) may lock the door (30) via the interior locking mechanism once inside the shared commodity (18).
B17.3. The system (10) of paragraph B17.2, wherein the system (10) is configured to receive a status signal from the shared commodity (18) when the interior locking mechanism is activated.
B17.4. The system (10) of any of paragraphs B1-B17.3, wherein the system (10) is configured to receive a/the status signal from the shared commodity (18).
B17.5. The system (10) of paragraph B17.4, wherein the status signal comprises information on a locking status of a/the door (30) of the shared commodity (18), information on an open status of the door (30) of the shared commodity (18), information on a closed status of the door (30) of the shared commodity (18), information on a readiness of the shared commodity (18), status information regarding cleaning of the shared commodity (18), status information regarding a current configuration of the shared commodity (18), and/or status information regarding preparation of the shared commodity (18) to accommodate passenger needs.
B18. The system (10) of any of paragraphs B1-B17.5, wherein the additional inputs comprise the individuals (12) preferred shared commodity (18) among a plurality of shared commodities (18) in the confined space (14).
B19. The system (10) of any of paragraphs B1-B18, wherein the system (10) is configured to accept overriding or suspending operation of the virtual queue (26) by crew members within the confined space (14).
B20. The system (10) of any of paragraphs B1-B19, wherein the system (10) is configured to provide the individual (12) an option to accept, defer, or cancel the request when the individual (12) is notified that it is the individual's (12) turn to use the shared commodity (18).
B21. The system (10) of paragraph B20, wherein the system (10) is configured to automatically remove the individual (12) from the virtual queue (26) if the request is not accepted or deferred within a threshold time period.
B22. The system (10) of any of paragraphs B1-B21, wherein the system (10) is configured to notify a crew member when the individual (12) at the top of the virtual queue (26) requires the shared commodity (18) be specially prepared for the individual (12).
B23. The system (10) of any of paragraphs B1-B22, wherein the system (10) is configured to trigger an automated cleaning process of the shared commodity (18) after the individual (12) has finished using the shared commodity (18).
B24. The system (10) of any of paragraphs B1-B23, wherein the system (10) is configured to collect data regarding the additional inputs and/or other preferences of the plurality of individuals (12).
B25. The system (10) of any of paragraphs B1-B24, wherein the system (10) is configured to collect data regarding usage time and frequency of the shared commodity (18).
B26. The system (10) of any of paragraphs B1-B25, wherein the system (10) is configured to collect data to inform an amount of supplies to have on hand for use of the shared commodity (18).
B27. The system (10) of any of paragraphs B1-B26, wherein the system (10) is configured to monitor one or more sensors (31) within the shared commodity (18) to detect when replacements and/or repairs are needed in the shared commodity (18).
B28. The system (10) of any of paragraphs B1-B27, wherein the system (10) is configured to monitor occupancy of the shared commodity (18).
B29. The system (10) of any of paragraphs B1-B28, wherein the confined space (14) comprises a plurality of shared commodities (18), wherein each respective shared commodity (18) of the plurality of shared commodities (18) is statically positioned in a different respective commodity location (20) within the confined space (14).
B30. The system (10) of paragraph B29, wherein each respective shared commodity (18) of the plurality of shared commodities (18) has a different respective virtual queue (26).
B31. The system (10) of paragraph B29 or B30, wherein the system (10) is configured to assign the individual (12) to the position in one virtual queue (26) from among a plurality of virtual queues (26) for the plurality of respective shared commodities (18) within the confined space (14).
B32. The system (10) of any of paragraphs B1-B31, wherein the system (10) is configured to notify the individual (12) of which respective shared commodity (18) to use from among a/the plurality of shared commodities (18) within the confined space (14).
B33. The system (10) of any of paragraphs B1-B32, wherein the system (10) is configured to select a respective shared commodity (18) among a/the plurality of shared commodities (18) within the confined space (14), in response to the request, wherein the system (10) is further configured to analyze movements of the individual (12) relative to the plurality of individuals (12), perform path planning analysis, maximize space between respective individuals (12) of the plurality of individuals (12), limit contact between respective individuals (12) of the plurality of individuals (12), and/or minimize wait time.
B34. The system (10) of any of paragraphs B1-B33, wherein the system (10) is configured to ensure that the individual (12) has sufficient space to move within the confined space (14), before notifying the individual (12) that the individual (12) may use the shared commodity (18).
B35. The system (10) of any of paragraphs B1-B34, wherein the system (10) is configured to prevent multiple individuals (12) of the plurality of individuals (12) from lining up or accumulating in an aisle (22) of the confined space (14).
B36. The system (10) of any of paragraphs B1-B35, wherein the system (10) is configured to analyze historical data regarding usage of the shared commodity (18), wherein the historical data informs assignment of the individual (12) to the position.
B37. The system (10) of any of paragraphs B1-B36, wherein the confined space (14) is a passenger aircraft having a pre-existing in-flight entertainment system, wherein the system (10) is integrated into the pre-existing in-flight entertainment system.
C1. A passenger aircraft comprising the system (10) of any of paragraphs B1-B37.
C2. The passenger aircraft of paragraph C1, wherein the assigned location (16) of each individual (12) is the individual's (12) seat assignment, and wherein the shared commodity (18) is a lavatory.
D1. The use of the system (10) of any of paragraphs B1-B37 to control movement of a plurality of individuals (12) within a confined space (14).
D2. The use of the system (10) according to paragraph D1, wherein the confined space (14) is a passenger aircraft, a train, or a bus.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, or A, B, and C together, and optionally any of the above in combination with at least one other entity.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

As used herein, the phrase, "for example," the phrase, "as an example," and/or simply the term "example," when used with reference to one or more components, features, details, structures, examples, and/or methods according to the present disclosure, are intended to convey that the described component, feature, detail, structure, example, and/or method is an illustrative, non-exclusive example of components, features, details, structures, examples, and/or methods according to the present disclosure. Thus, the described component, feature, detail, structure, example, and/or method is not intended to be limiting, required, or exclusive/exhaustive; and other components, features, details, structures, examples, and/or methods, including structurally and/or functionally similar and/or equivalent components, features, details, structures, examples, and/or methods, are also within the scope of the present disclosure.

## Claims

1. A method (100) of regulating movement of a plurality of individuals (12) within a confined space (14), wherein each individual (12) is given an assigned location (16) within the confined space (14), the method (100) comprising:
receiving (102) a request from an individual (12) of the plurality of individuals (12) to use a shared commodity (18), wherein the shared commodity (18) is statically positioned in a commodity location (20) within the confined space (14), and wherein the individual (12) must move from the individual's (12) assigned location (16) to the commodity location (20) to access the shared commodity (18);
receiving (104) additional inputs from the individual (12) pertaining to the request;
assigning (106) the individual (12) to a position in a virtual queue (26) for the shared commodity (18), wherein the virtual queue (26) comprises a sequential listing of entries (44), wherein the assigning (106) is based on the request, the additional inputs, a layout of the confined space (14), the assigned location (16) of the individual (12), and the commodity location (20); and
notifying (108) the individual (12) that the individual (12) may use the shared commodity (18), when the position of the individual (12) in the virtual queue (26) reaches a top of the sequential listing of entries (44) of the virtual queue (26).

2. The method (100) according to claim 1, further comprising changing (110) the position of the individual (12) in the virtual queue (26) in response to a second request from a second individual (12) of the plurality of individuals (12) to use the shared commodity (18).

3. The method (100) according to claim 1 or 2, wherein the assigned location (16) for each individual (12) of the plurality of individuals (12) is a seat assignment, wherein the confined space (14) comprises an aircraft, and wherein the shared commodity (18) comprises a lavatory.

4. The method (100) according to claim 1, 2, or 3, further comprising:
restricting access (112) to the shared commodity (18) for all individuals (12) of the plurality of individuals (12) except for a respective individual (12) whose position is at the top of the sequential listing of entries (44) of the virtual queue (26); and
allowing access (114) to the shared commodity (18) by the respective individual (12) whose position is at the top of the sequential listing of the virtual queue (26).

5. The method (100) according to any one of claims 1-4, wherein the assigning (106) the individual (12) to the position in the virtual queue (26) is based on one or more priority rules, wherein the one or more priority rules are configured to assign different positions to different individuals (12) of the plurality of individuals (12), based on information obtained from the additional inputs from the individual (12).

6. The method (100) according to claim 5, wherein the additional inputs comprise an age of the individual (12) submitting the request, one or more medical conditions of the individual (12), the assigned location (16) of the individual (12), and/or one or more special accommodations requested by the individual (12), and wherein the one or more priority rules are configured to assign different positions to different individuals (12) of the plurality of individuals (12), based on the additional inputs.

7. The method (100) according to any one of claims 1-6, wherein the notifying (108) the individual (12) that the individual (12) may use the shared commodity (18) comprises providing access instructions for accessing the shared commodity (18).

8. The method (100) according to claim 7, wherein the providing access instructions comprises sending access instructions to one or more selected from the group consisting of a mobile app, an in-flight entertainment monitor, a handheld device, and a personal device of the individual (12).

9. The method (100) according to any one of claims 1-8, wherein the shared commodity (18) comprises a door (30) separating the shared commodity (18) from a remainder of the confined space (14), and wherein the method (100) further comprises automatically locking the door (30) after the individual (12) has finished using the shared commodity (18) and leaves the commodity location (20).

10. The method (100) according to any one of claims 1-9, further comprising receiving historical data as input, wherein the historical data comprises data from previous flights, data from other routes, data from other aircraft, data from passenger experiences, passenger profile data, and/or passenger feedback data.

11. The method (100) according to any one of claims 1-10, wherein the notifying (108) the individual (12) comprises providing an option to accept, defer, or cancel the request, and wherein the method (100) further comprises automatically removing (116) the individual (12) from the virtual queue (26) if the request is not accepted or deferred within a threshold time period.

12. The method (100) according to any one of claims 1-11, further comprising collecting data (124) regarding one or more selected from the group consisting of additional inputs submitted by individuals (12), preferences submitted by the plurality of individuals (12), usage time of the shared commodity (18), and usage frequency of the shared commodity (18).

13. The method (100) according to any one of claims 1-12, wherein the confined space (14) comprises a plurality of shared commodities (18), wherein each respective shared commodity (18) of the plurality of shared commodities (18) is statically positioned in a different respective commodity location (20) within the confined space (14), wherein each respective shared commodity (18) of the plurality of shared commodities (18) has a different respective virtual queue (26), and wherein the assigning (106) the individual (12) to the position comprises assigning the individual (12) to the position in one virtual queue (26) from among a plurality of virtual queues (26) for the plurality of shared commodities (18) within the confined space (14).

14. The method (100) according to any one of claims 1-13, further comprising selecting a respective shared commodity (18) among a plurality of shared commodities (18) within the confined space (14), in response to the request, wherein the selecting the respective shared commodity (18) comprises analyzing movements of the individual (12) relative to the plurality of individuals (12), path planning analysis, and limiting contact between respective individuals (12) of the plurality of individuals (12).

15. The method (100) according to any one of claims 1-14, further comprising ensuring that the individual (12) has sufficient space to move within the confined space (14), before the notifying (108) the individual (12) that the individual (12) may use the shared commodity (18).
